# EUROPÄISCHE PATENTSCHRIFT

(11) **EP 1 753 982 B1**
(45) Veröffentlichungstag und Bekanntmachung des Hinweises auf die Patenterteilung: **23.04.2014**
(21) Anmeldenummer: 05751002.6
(22) Anmeldetag: 03.06.2005
(51) Int. Cl.: F16H 61/04

(54) **VERFAHREN ZUR STEUERUNG EINES AUTOMATISIERTEN SCHALTGETRIEBES**
METHOD FOR CONTROLLING AN AUTOMATIC TRANSMISSION
PROCEDE DE COMMANDE D'UNE TRANSMISSION AUTOMATIQUE

(30) Priorität: 05.06.2004 DE 102004027597
(43) Veröffentlichungstag der Anmeldung: 21.02.2007
(73) Patentinhaber: ZF Friedrichshafen AG, 88038 Friedrichshafen (DE)
(72) Erfinder: KRAMER, Rupert, 88048 Friedrichshafen (DE); STEINBORN, Mario, 88046 Friedrichshafen (DE)
(86) Internationale Anmeldenummer: PCT/EP2005/005980
(87) Internationale Veröffentlichungsnummer: WO 2005/121606

(56) Entgegenhaltungen:
- WO-A-02/087916
- WO-A-03/078197
- DE-A1- 10 228 708
- US-A1- 2003 027 683

## Beschreibung

Die Erfindung betrifft ein Verfahren zur Steuerung eines automatisierten Schaltgetriebes gemäß dem Oberbegriff des Patentanspruchs 1.

Automatisierte Schaltgetriebe werden seit geraumer Zeit in unterschiedlichen Kraftfahrzeugtypen genutzt. Bekanntermaßen wird bei solchen Fahrzeugen bevorzugt die Betätigung einer Anfahr- und/oder Schaltkupplung ebenso wie das Auswählen der Schaltgassen sowie das Ein- und Auslegen von Getriebegängen mit Hilfe von druckmittelbetätigbaren Aktuatoren realisiert, welche üblicherweise als Kolben-Zylinder-Anordnungen ausgebildet sind. Demgegenüber sind aber auch Kraftfahrzeuge bekannt, bei denen nur die Anfahr- und/oder Schaltkupplung oder nur diejenigen Getriebeelemente hilfskraftbetätigbar sind, welche zur Auswahl und zum Ein- bzw. Auslegen des Getriebegangs dienen.

Bei den für das Ein- bzw. Auslegen eines Getriebegangs notwendigen Getriebeelementen handelt es sich bekanntermaßen um Koppelmittel wie Schiebemuffen, die axialverschiebbar neben gangspezifischen Loszahnrädern auf einer Getriebewelle angeordnet sind. Zum Einlegen eines Gangs wird wenigstens ein solches Koppelmittel aktuatorbetätigt in Richtung zu dem zugeordneten Losrad verschoben und mit diesem in Drehverbindung gebracht, so dass letztlich eine drehfeste und abtriebswirksame Verbindung zwischen dem Losrad und der Getriebewelle geschaffen ist. Ein Gangauslegen erfolgt durch eine entgegengerichtete Betätigung eines solchen Koppelmittels.

Die Betätigung der genannten Aktuatoren wird von einem Getriebesteuerungsgerät mit Hilfe von Steuerungs- und Regelungsprogrammen kontrolliert, welche Informationen beispielsweise über die Fahrsituation, die Schaltsituation sowie den Leistungswunsch des Fahrzeugführers zu Kuppel- und Schaltbefehlen verarbeiten.

In Personenfahrzeugen genutzte automatisierte Schaltgetriebe verfügen üblicherweise über bremswirksame Synchronisierungseinrichtungen in Form von Reibflächen an den jeweiligen Losrädern und an gesonderten Synchronringen, wobei letztere jeweils zwischen einem Losrad und dem genannten axialverschiebbaren Koppelmittel angeordnet sind. Mit Hilfe der aufeinander gerichteten und gegeneinander führbaren Reibflächen ist während eines Schaltvorgangs durch einen Reibkontakt dieser Reibflächen eine Drehzahlangleichung zwischen der Drehzahl einer Getriebewelle und einem drehbar auf dieser Getriebewelle drehgelagerten Losrad des neuen Getriebegangs erreichbar.

Dagegen werden in Nutzfahrzeugen in der Regel automatisierte Schaltgetriebe genutzt, die ohne die gerade genannten Synchronisationseinrichtungen auskommen und über vergleichsweise einfach aufgebaute Klauenkupplungen verfügen. Um dennoch ein für ein bestimmten Übersetzungsverhältnis vorhandenes Losrad des Getriebes an die Drehzahl einer diesem Losrad zugeordneten Getriebewelle anzupassen, verfügen derartige Automatgetriebe bekanntermaßen über eine Getriebebremse, durch deren Bremswirkung beispielsweise die Getriebeeingangswelle während eines Hochschaltvorgangs zur genannten Drehzahlangleichung abbremsbar ist.

Für einen Übersetzungsänderungsvorgang in einem solchen Getriebe ist es gewöhnlich nicht notwendig, dass die durch das gewünschte neue Übersetzungsverhältnis und die Fahrgeschwindigkeit des Fahrzeugs vorgegebene Ziel- oder Synchrondrehzahl SD mit Hilfe der genannten Synchronisationsmittel exakt erreicht wird. Vielmehr ist es üblich, die Getriebeeingangsdrehzahl soweit an die Synchrondrehzahl SD anzugleichen, dass deren Wert in ein sogenanntes Einschaltdrehzahlfenster F fällt, dessen Grenzen FO und FU etwas oberhalb bzw. etwas unterhalb der Synchrondrehzahl SD liegen.

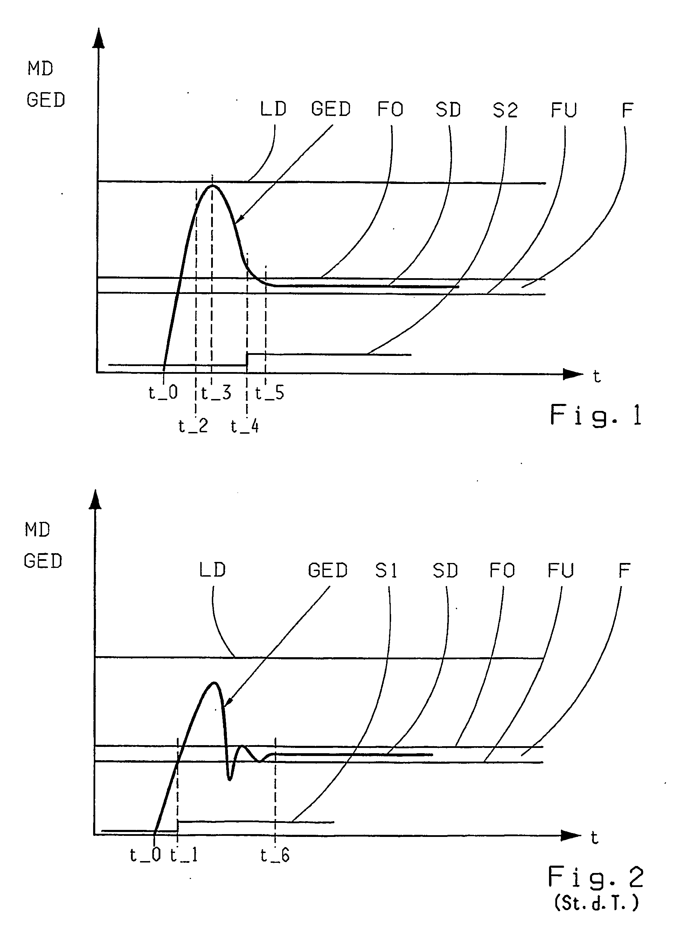

Beim Betrieb von automatisierten Schaltgetrieben kann es situationsbedingt, z.B. bei einer Anfahrgangschaltung kurz vor einem Fahrzeugstillstand, vorkommen, dass die Synchrondrehzahl SD bzw. das angesprochene Drehzahlfenster F für den neuen Gang unter der Leerlaufdrehzahl LD des Fahrzeugantriebsmotors liegt. Eine derartige Situation ist in Fig. 2 dargestellt.

Derartige Schaltungen werden gemäß Fig. 2 üblicherweise als Rückschaltungen durchgeführt, bei denen die Drehzahl der Getriebeeingangswelle bei teil- oder ganz geschlossener Kupplung bis an das Drehzahlfenster F herangeführt wird, welches unterhalb der Leerlaufdrehzahl LD des Antriebsmotors liegt.

Der Einschaltvorgang, also das Auslösen eines Signals eines Getriebesteuergeräts zur Betätigung eines Gangeinlegeaktuators, wird bei bekannten Getriebesteuerungsverfahren in demjenigen Zeitpunkt t_1 ausgelöst, in dem die Getriebeeingangsdrehzahl GED von kleinen Drehzahlwerten kommend den unteren Grenzwert FU des genannten Einschaltdrehzahlfensters F erreicht.

Da der Gradient der Getriebeeingangsdrehzahl GED bei teil- oder ganz geschlossener Kupplung kaum beeinflussbar und vergleichsweise steil ist, findet der konkrete Einschaltvorgang, also das drehfeste Verbinden des gangspezifisch betroffenen Losrades mit der zugeordneten Getriebewelle mit Hilfe der genannten Koppelmittel meistens erst dann statt, wenn die Getriebeeingangsdrehzahl GED im Sinne eines Drehzahlüberschwingers den oberen Drehzahlgrenzwert FO des Drehzahlfensters F bereits überschritten hat. In einer solchen Situation liegt eine vergleichsweise hohe Drehzahldifferenz vor, welches mit entsprechenden Komforteinbußen beim drehfesten Verbinden des betroffenen Losrades mit der zugeordneten Getriebewelle verbunden ist. Ein Öffnen der Kupplung, um das konkrete Einlegen des Gangs zu erleichtern und den Schaltkomfort zu verbessern, erfolgt meistens zu spät oder aber gar nicht.

Die gattungsbildende WO 02/087916 A1 offenbart einen Antrieb für Kraftfahrzeuge, bestehend aus einem Verbrennungsmotor und einem nicht synchronisierten automatisierten Schaltgetriebe mit einer Zwischenwelle, welches mit dem Verbrennungsmotor über eine automatisierte Kupplung verbunden ist. Die Kupplung und das automatisierte Schaltgetriebe werden von einer elektronischen Steuereinheit gesteuert. Dann wenn die Synchrondrehzahl für den neuen Getriebegang unterhalb der Motorleerlaufdrehzahl liegt, wird die Zwischenwelle bis zum Stillstand abgebremst, anschließend die Kupplung langsam geschlossen und der gewählte Getriebegang eingelegt, wenn die Antriebswelle einen geeigneten Drehzahlbereich für das Einlegen des gewählten Getriebegangs erreicht hat.

Vor diesem Hintergrund liegt der Erfindung die Aufgabe zugrunde, ein Steuerungsverfahren für ein automatisiertes Schaltgetriebe vorzustellen, mit dem ein komfortabler Schaltvorgang insbesondere dann durchführbar ist, wenn die Synchrondrehzahl bezogen auf den Getriebeeingang für den neuen Gang kleiner ist als die Leerlaufdrehzahl des Antriebsmotors.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich der Schaltkomfort bei einem Schaltvorgang, bei dem die Synchrondrehzahl für den neuen Getriebegang unter der Leerlaufdrehzahl eines mit dem Getriebe verbindbaren Antriebsmotors liegt, deutlich verbessern lässt, wenn die Getriebeeingangsdrehzahl nicht wie bisher üblich mit ansteigenden Drehzahlwerten, sondern von größeren Drehzahlwerten kommend zur Synchrondrehzahl des neuen Getriebegangs herangeführt wird. Der technische Hintergrund dafür ist, dass bei einem solchen hohen Drehzahlniveau bei geöffneter Kupplung und fallender Drehzahl der Drehzahlgradient leichter beeinflussbar und daher günstiger für den Einschaltvorgang ist, als bei einer Drehzahlbeschleunigung bei teilweise oder ganz geschlossener Kupplung.

Demnach geht die Erfindung aus von einem Verfahren zur Steuerung eines automatisierten Schaltgetriebes während eines als Rückschaltung durchzuführenden Übersetzungsänderungsvorgangs, bei dem die Synchrondrehzahl für den neuen Getriebegang unter der Leerlaufdrehzahl eines mit dem Getriebe verbindbaren Antriebsmotors liegt, und bei dem ein Gangeinlegeaktuator zum Einlegen des neuen Getriebegangs dann aktiviert wird, wenn die Getriebeeingangsdrehzahl ein vordefiniertes Drehzahlfenster erreicht hat, welches die Synchrondrehzahl einschließt. Zur Lösung der gestellten Aufgabe ist zudem vorgesehen, dass der Schaltvorgang abweichend von einem sonst üblichen Rückschaltmodus in einem Hochschaltmodus durchgeführt wird.

Durch diese Steuerung eines Schaltvorgangs lässt sich die Getriebeeingangsdrehzahl komfortabler und unter Umständen auch schneller als bisher üblich an die Synchrondrehzahl für den neuen Getriebegang angleichen, da die Motordrehzahl bzw. die Drehzahl der Getriebeeingangswelle bei teilgeschlossener Kupplung zunächst mit einem vergleichsweise höheren Drehzahlgradienten angehoben und dann anschließend geregelt bis zur Synchrondrehzahl abgebremst werden kann.

Hinsichtlich der Auslösung von entsprechenden Steuerungsbefehlen durch ein Getriebesteuerungsgerät führt dies beispielsweise dazu, dass ein Gangeinlegeaktuator in dieser Betriebssituation erst dann aktiviert wird, wenn die Getriebeeingangswelle den oberen Drehzahlgrenzwert des Drehzahlfensters von höheren Getriebeeingangsdrehzahlwerten kommend erreicht.

In einer bevorzugten Ausführungsform der Erfindung bedeutet dies, dass die Getriebeeingangsdrehzahl bei teilweise oder ganz geschlossener Anfahr- und/oder Schaltkupplung bis über den oberen Drehzahlgrenzwert des Drehzahlfensters angehoben wird, dass dann die Kupplung geöffnet wird und schließlich die Getriebeeingangsdrehzahl bis zur Synchrondrehzahl durch abbremsen reduziert wird.

Gemäß einer anderen Variante des Verfahrens kann vorgesehen sein, dass die Anfahr- und/oder Schaltkupplung geöffnet wird, nachdem die Getriebeeingangsdrehzahl einen Wert oberhalb des oberen Drehzahlgrenzwertes des Drehzahlfensters erreicht hat und bevor diese Getriebeeingangsdrehzahl den gleichen Wert aufweist wie die Motorleerlaufdrehzahl.

Um den Übersetzungsänderungsvorgang zeitlich möglichst kurz zu gestalten, ist zudem bevorzugt vorgesehen, dass unmittelbar nach dem Öffnen der Anfahr- und/oder Schaltkupplung eine Getriebebremse aktiviert wird, die mittelbar oder unmittelbar auf die Getriebeeingangswelle bremsend einwirkt. Dabei bleibt die Getriebebremse zumindest solange aktiviert, bis die Getriebeeingangsdrehzahl von höheren Werten kommend den oberen Drehzahlgrenzwert des Drehzahlfensters erreicht hat.

Gemäß einer weiteren Variante kann aber auch vorgesehen sein, dass die Getriebebremse mindestens solange von dem Getriebesteuerungsgerät geregelt im Bremsbetrieb verbleibt, bis die Getriebeeingangsdrehzahl die Synchrondrehzahl erreicht hat.

Durch die Erfindung ist auch diejenige Ausgestaltungsform des Verfahrens mit erfasst, gemäß der die Getriebebremse mindestens solange regelnd aktiviert bleibt, bis die Getriebeeingangsdrehzahl ausgehend von einem vorbestimmten oder aktuellen gemessenen Drehzahlgradientwert die Synchrondrehzahl erreicht hat.

Das Öffnen der Anfahr- und/oder Schaltkupplung sowie das Betätigen der Getriebebremse kann aber auch zeitlich überlappend erfolgen, so dass die Getriebebremse bereits dann aktiviert wird, wenn die Anfahr- und/oder Schaltkupplung erst nur teilgeöffnet ist.

Außerdem wird es als sinnvoll beurteilt, wenn die Getriebebremse derart bremsend betätigt wird, dass ein Getriebeeingangsdrehzahlgradient erzeugt wird, mit dem ein Schaltvorgang mit möglichst hohem Schaltkomfort realisierbar ist.

Schließlich ist weiter Bestandteil der Erfindung, dass dann ein Signal zum Schalten des Ganges ausgelöst wird, wenn die Getriebeeingangsdrehzahl von hohen Drehzahlwerten kommend den oberen Drehzahlgrenzwert des Drehzahlfensters oder die Synchrondrehzahl erreicht hat.

Letztlich kann das erfindungsgemäße Verfahren auch dann genutzt werden, wenn die Anfahr- und/oder Schaltkupplung nicht von einem gesonderten Aktuator sondern durch Fliehkraft betätigbar ausgebildet ist. In einem solchen Fall wird zum Schließen und Öffnen der Kupplung die Drehzahl des Antriebsmotors verändert.

Die Erfindung lässt sich anhand eines Ausführungsbeispiels weiter erläutern. Dazu ist der Beschreibung eine Zeichnung beigefügt. In dieser zeigt
- Fig. 1: den zeitlichen Verlauf der Getriebeeingangsdrehzahl während eines Schaltvorgangs, bei dem die Synchrondrehzahl unter der Leerlaufdrehzahl des Antriebsmotors liegt, bei Nutzung des erfindungsgemäßen Steuerungsverfahrens, und
- Fig. 2: eine Darstellung wie in Fig. 1, jedoch bei Nutzung eines bekannten Steuerungsverfahrens.

Wie eingangs bereits erwähnt wurde, zeigt Fig. 2 den Drehzahlverlauf einer Getriebeeingangswelle eines automatisierten Schaltgetriebes, bei dem die Ziel- oder Synchrondrehzahl SD deutlich unter der Leerlaufdrehzahl LD eines mit dem Getriebe über eine Anfahr- und/oder Schaltkupplung verbindbaren Antriebsmotors liegt.

Das üblicherweise in solchen Fahrbetriebssituationen genutzte Steuerungsverfahren sieht vor, dass zur Durchführung des Übersetzungsänderungsvorgangs die Kupplung ganz oder teilweise geschlossen wird, und dass ab einem Zeitpunkt t_0 durch vollständiges oder teilweises Schließen der Kupplung die Drehzahl GED der Getriebeeingangswelle wie dargestellt ansteigt. Dabei läuft der Antriebsmotor des Fahrzeugs mit Leerlaufdrehzahl.

Sobald die Getriebeeingangsdrehzahl GED im Zeitpunkt t_1 den unteren Drehzahlgrenzwert FU des Drehzahlfensters F erreicht hat, wird von dem Getriebesteuergerät ein Signal S1 für einen Gangeinlegeaktuator erzeugt, infolge dessen dieser Aktuator mit dem Einlegen des Zielgangs beginnt. Dabei verschiebt dieser wie eingangs bereits erläutert ein Koppelmittel, wie etwa eine drehfest und axialverschiebbar auf einer Getriebewelle angeordnete Schiebemuffe, mit dem ein gangspezifisches Getriebelosrad mit der zugeordneten Getriebewelle drehfest verbindbar ist.

Da dieser mechanische Schaltablauf eine gewisse Zeit in Anspruch nimmt, erfolgt dieser bei Getriebeeingangsdrehzahlen GED, die deutlich oberhalb des Drehzahlfensters F liegen. Daher besteht auch eine vergleichsweise große Drehzahldifferenz zwischen der Synchrondrehzahl SD und der Getriebeeingangsdrehzahl GED, welche im Ergebnis zu einem wenig komfortablen und daher lastschlagbehafteten Gangwechsel führt. Wie Fig. 2 verdeutlicht, ist die Getriebeeingangsdrehzahl GED erst im Zeitpunkt t_6 identisch mit der Synchrondrehzahl SD, welches den Abschluss des Gangschaltvorgangs markiert.

Fig. 1 zeigt im Vergleich dazu, dass das Heranführen der Getriebeeingangsdrehzahl GED an die Ziel- oder Synchrondrehzahl SD mit Hilfe des erfindungsgemäßen Steuerungsverfahrens etwas schneller und mit einem harmonischeren Drehzahlverlauf erfolgt. Daher ist auch ein sehr viel komfortabler Schaltvorgang realisiert.

Wenngleich es sich bei dem vorliegenden Schaltvorgang um eine Rückschaltung handelt, bei der die Ziel- oder Synchrondrehzahl unterhalb der Leerlaufdrehzahl des Antriebsmotors des Fahrzeugs liegt, wird dieser Übersetzungsänderungsvorgang erfindungsgemäß demnach so durchgeführt, als handele es sich hierbei um einen Hochschaltvorgang.

Im einzelnen wird bei diesem Steuerungsverfahren durch ein diesbezügliches Steuerungssignal des Getriebesteuerungsgerätes die Anfahr- oder Schaltkupplung teilweise oder ganz geschlossen, so dass eine Drehmomentübertragung von der Antriebswelle des Antriebsmotors auf die Getriebeeingangswelle des Automatgetriebes ermöglicht wird. Wie Fig. 1 verdeutlicht, läuft der Antriebsmotor in dieser Phase mit seiner Leerlaufdrehzahl LD. Sodann wird beginnend mit dem Zeitpunkt t_0, ab dem ein ausreichend hohes Drehmoment zur Beschleunigung der Getriebeeingangswelle zur Verfügung steht, die Getriebeeingangsdrehzahl GED mit einem vergleichsweise großen Drehzahlgradienten angehoben.

Von besonderer Bedeutung ist nun, dass das Steuersignal S2 zur Betätigung des genannten Gangeinlegeaktuators nicht wie bei dem Verfahren gemäß Fig. 2 schon bei Drehzahlgleichheit zwischen der Getriebeeingangswelle und der unteren Grenzdrehzahl FU des Drehzahlfensters F ausgelöst wird, sondern erst später zum Zeitpunkt t_4.

Dadurch steigt die Getriebeeingangsdrehzahl GED zunächst weiter an. In diesem Beispiel wird dann zu einem Zeitpunkt t_2 die Kupplung durch einen diesbezüglichen Steuerbefehl geöffnet, so dass die Getriebeeingangswelle mit abnehmenden Drehzahlgradienten zunächst antriebslos weiterdreht. Zeitlich überlappend mit dem Öffnen der Kupplung, oder, wie in Fig. 1 dargestellt, unmittelbar nach dem Öffnen der Kupplung wird im Zeitpunkt t_3 eine Getriebebremse aktiviert, durch deren Bremseingriff auf die Getriebeeingangswelle deren Drehzahl GED geregelt zunächst bis zum Zeitpunkt t_4 reduziert wird.

In diesem Zeitpunkt t_4 erreicht die Getriebeeingangsdrehzahl GED von hohen Drehzahlwerten kommend den oberen Drehzahlgrenzwert FO des Drehzahlfensters F. Dieses Ereignis wird von dem Getriebesteuergerät ermittelt und als Startzeitpunkt für das Auslösen eines Steuersignals S2 an den Gangeinlegeaktuator gewertet. Durch die Betätigungswirkung des Gangeinlegeaktuators auf die genannten Koppelmittel im Automatgetriebe wird dann der konkrete Wechsel des Übersetzungsänderungsverhältnisses vollzogen und anschließend die genannte Kupplung wieder geschlossen. Der Gangwechsel ist dann im Zeitpunkt t_5, der noch vor dem Zeitpunkt t_6 gemäß Fig. 2 liegt, abgeschlossen.

Wie Fig. 1 gegenüber Fig. 2 verdeutlicht, erreicht die Getriebeeingangsdrehzahl GED unter Anwendung des erfindungsgemäßen Verfahrens mit einem sehr viel harmonischeren Verlauf die Ziel- oder Synchrondrehzahl SD, so dass im Unterschied zu dem bekannten Verfahren ein komfortablerer Schaltvorgang realisiert ist.

Sofern die Anfahr- und/oder Schaltkupplung nicht von einem gesonderten Aktuator sondern durch Fliehkraft betätigbar ausgebildet ist, so ist gemäß der Erfindung vorgesehen, dass zum Schließen und Öffnen der Kupplung die Drehzahl des Antriebsmotors verändert wird.

### Bezugszeichen

- F: Einschaltdrehzahlfenster
- FU: Unterer Drehzahlgrenzwert des Fensters
- FO: Oberer Drehzahlgrenzwert des Fensters
- GED: Getriebeeingangsdrehzahl
- LD: Leerlaufdrehzahl des Antriebsmotors
- MD: Motordrehzahl
- SD: Synchrondrehzahl
- t: Zeit
- t_0: Ausgangszeitpunkt
- t_1: Startzeitpunkt Aktivierung Gangeinlegeaktuator (Stand der Technik)
- t_2: Zeitpunkt zum Öffnen der Kupplung
- t_3: Zeitpunkt Aktivierung einer Getriebebremse
- t_4: Startzeitpunkt Aktivierung Gangeinlegeaktuator
- t_5: Zeitpunkt der Drehzahlgleichheit
- t_6: Zeitpunkt der Drehzahlgleichheit
- S_1: Schaltsignal (Stand der Technik)
- S_2: Schaltsignal

## Patentansprüche

1. Verfahren zur Steuerung eines automatisierten Schaltgetriebes während eines als Rückschaltung durchzuführenden Übersetzungsänderungsvorgangs, bei dem die Synchrondrehzahl (SD) für den neuen Getriebegang unter der Leerlaufdrehzahl (LD) eines mit dem Getriebe verbindbaren Antriebsmotors liegt, und bei dem ein Gangeinlegeaktuator zum Einlegen eines neuen Getriebegangs dann aktiviert wird, wenn die Getriebeeingangsdrehzahl (GED) ein vordefiniertes Einschaltdrehzahlfenster (F) erreicht hat, welches die Synchrondrehzahl (SD) einschließt, **dadurch gekennzeichnet, dass** der Schaltvorgang abweichend vom bisher üblichen Rückschaltmodus in einem Hochschaltmodus durchgeführt wird.

2. Verfahren nach Anspruch 1, **dadurch gekennzeichnet, dass** die Getriebeeingangsdrehzahl (GED) bei teilweise oder ganz geschlossener Anfahr- und/oder Schaltkupplung bis über den oberen Drehzahlgrenzwert (FO) des Drehzahlfensters (F) angehoben wird, dass dann die Kupplung geöffnet wird, und dass schließlich die Getriebeeingangsdrehzahl (GED) bis zur Synchrondrehzahl (SD) abgebremst wird.

3. Verfahren nach Anspruch 2, **dadurch gekennzeichnet, dass** die Anfahr- und/oder Schaltkupplung geöffnet wird, nachdem die Getriebeeingangsdrehzahl (GED) den oberen Drehzahlgrenzwert (FO) des Drehzahlfensters (F) überschritten hat und bevor dieselbe die Motorleerlaufdrehzahl (LD) erreicht hat.

4. Verfahren nach wenigstens einem der vorherigen Ansprüche,
**dadurch gekennzeichnet, dass** der Gangeinlegeaktuator dann aktiviert wird, wenn die Getriebeeingangsdrehzahl (GED) den oberen Drehzahlgrenzwert (FO) des Drehzahlfensters (F) von höheren Getriebeeingangsdrehzahlwerten kommend erreicht hat.

5. Verfahren nach wenigstens einem der vorherigen Ansprüche,
**dadurch gekennzeichnet, dass** nach dem Öffnen der Anfahr- und/oder Schaltkupplung eine Getriebebremse aktiviert wird.

6. Verfahren nach wenigstens einem der vorherigen Ansprüche,
**dadurch gekennzeichnet, dass** die Getriebebremse bereits dann aktiviert wird, wenn die Anfahr- und/oder Schaltkupplung erst nur teilgeöffnet ist.

7. Verfahren nach wenigstens einem der vorherigen Ansprüche,
**dadurch gekennzeichnet, dass** die Getriebebremse mindestens solange aktiviert bleibt, bis die Getriebeeingangsdrehzahl (GED) von höheren Wer ten kommend den oberen Drehzahlgrenzwert (FO) des Einschaltdrehzahlfensters (F) erreicht hat.

8. Verfahren nach wenigstens einem der vorherigen Ansprüche,
**dadurch gekennzeichnet, dass** die Getriebebremse mindestens solange regelnd aktiviert bleibt, bis die Getriebeeingangsdrehzahl (GED) die Synchrondrehzahl (SD) erreicht hat.

9. Verfahren nach wenigstens einem der vorherigen Ansprüche,
**dadurch gekennzeichnet, dass** die Getriebebremse mindestens solange regelnd aktiviert bleibt, bis die Getriebeeingangsdrehzahl ausgehend von einem aktuellen Drehzahlgradientwert die Synchrondrehzahl erreicht hat.

10. Verfahren nach wenigstens einem der vorherigen Ansprüche,
**dadurch gekennzeichnet, dass** die Getriebebremse derart bremsend betätigt wird, dass ein Getriebeeingangsdrehzahlgradient erzeugt wird, mit dem ein Schaltvorgang mit hohem Schaltkomfort realisierbar ist.

11. Verfahren nach wenigstens einem der vorherigen Ansprüche,
**dadurch gekennzeichnet, dass** dann ein Schließsignal für die Anfahr- und/oder Schaltkupplung zum Einnehmen einer Schlupfposition ausgelöst wird, wenn die Getriebeeingangsdrehzahl (GED) von hohen Drehzahlwerten kommend den oberen Drehzahlgrenzwert (FO) des Drehzahlfensters (F) oder die Synchrondrehzahl (SD) erreicht hat.

12. Verfahren nach wenigstens einem der vorherigen Ansprüche,
**dadurch gekennzeichnet, dass** dann, wenn die Anfahr- und/oder Schaltkupplung nicht von einem gesonderten Aktuator sondern durch Fliehkraft betätigbar ausgebildet ist, zum Schließen und Öffnen der Kupplung die Drehzahl des Antriebsmotors verändert wird.

## Claims

1. Method for controlling an automatic transmission during a transmission ratio changing process which is to be carried out as shifting down, in which the synchronous rotational speed (SD) for the new gearspeed is below the idling speed (LD) of a drive engine which can be connected to the transmission, and in which a gearspeed engagement actuator for engaging a new gearspeed is activated when the gear input speed (GED) has reached a predefined switch-on rotational speed window (F) which includes the synchronous rotational speed (SD), **characterized in that**, in contrast with the previously customary shifting down mode, the shifting process is carried out in a shifting up mode.

2. Method according to Claim 1, **characterized in that** the gear input speed (GED) is increased to above the upper rotational speed limiting value (FO) of the rotational speed window (F) with the starter clutch and/or clutch partially or entirely closed, **in that** the clutch is then opened, and **in that** finally the gear input speed (GED) is braked to the synchronous rotational speed (SD).

3. Method according to Claim 2, **characterized in that** the starter clutch and/or clutch is opened after the gear input speed (GED) has exceeded the upper rotational speed limiting value (FO) of the rotational speed window (F) and before said gear input speed (GED) has reached the engine idling speed (LD).

4. Method according to at least one of the preceding claims,
**characterized in that** the gearspeed engagement actuator is activated when the gear input speed (GED) has reached the upper rotational speed limiting value (FO) of the rotational speed window (F) coming from relatively high gear input speed values.

5. Method according to at least one of the preceding claims,
**characterized in that** after opening of the starter clutch and/or clutch a gear brake is activated.

6. Method according to at least one of the preceding claims,
**characterized in that** the gear brake is already activated when the starter clutch and/or clutch is first only partially opened.

7. Method according to at least one of the preceding claims,
**characterized in that** the gear brake remains activated at least until the gear input speed (GED) coming from relatively high values has reached the upper rotational speed limiting value (FO) of the switch-on rotational speed window (F).

8. Method according to at least one of the preceding claims,
**characterized in that** the gear brake remains activated in a regulating fashion at least until the gear input speed (GED) has reached the synchronous rotational speed (SD).

9. Method according to at least one of the preceding claims,
**characterized in that** the gear brake remains activated in a regulating fashion at least until the gear input speed has reached the synchronous rotational speed from a current rotational speed gradient value.

10. Method according to at least one of the preceding claims,
**characterized in that** the gear brake is activated in a braking fashion in such a way that a gear input speed gradient is generated with which a shift process can be implemented with a high shifting comfort level.

11. Method according to at least one of the preceding claims,
**characterized in that** a closing signal for the starter clutch and/or clutch to assume a slip position is triggered if the gear input speed (GED) has reached the upper rotational speed limiting value (FO) of the rotational speed window (F) or the synchronous rotational speed (SD) coming from high rotational speed values.

12. Method according to at least one of the preceding claims,
**characterized in that** when the starter clutch and/or clutch is not designed in such a way that it can be activated by a separate actuator but rather by centrifugal force, the rotational speed of the drive motor is changed in order to close and open the clutch.

## Revendications

1. Procédé de commande d'une transmission automatisée pendant une opération de changement de rapport de transmission à effectuer sous forme de rétrogradage, dans lequel la vitesse de rotation synchrone (SD) pour le nouveau rapport de transmission est inférieure à la vitesse de rotation de marche à vide (LD) d'un moteur d'entraînement pouvant être connecté à la transmission, et dans lequel un actionneur d'enclenchement de rapport est activé pour enclencher un nouveau rapport de transmission lorsque la vitesse de rotation d'entrée de la transmission (GED) a atteint une fenêtre de vitesses de rotation d'enclenchement prédéfinie (F), qui inclut la vitesse de rotation synchrone (SD), **caractérisé en ce que** l'opération de changement de rapport est effectuée de manière différente depuis un mode de rétrogradage jusqu'alors usuel dans un mode de passage à un rapport supérieur.

2. Procédé selon la revendication 1, **caractérisé en ce que** la vitesse de rotation d'entrée de la transmission (GED) est augmentée dans le cas où un embrayage de démarrage et/ou de changement de rapport est partiellement ou complètement fermé jusqu'au-dessus de la valeur limite de vitesse de rotation supérieure (FO) de la fenêtre de vitesses de rotation (F), **en ce que** l'embrayage est ensuite ouvert et **en ce que**, finalement, la vitesse de rotation d'entrée de la transmission (GED) est ralentie jusqu'à la vitesse de rotation synchrone (SD).

3. Procédé selon la revendication 2, **caractérisé en ce que** l'embrayage de démarrage et/ou de changement de rapport est ouvert après que la vitesse de rotation d'entrée de la transmission (GED) a dépassé la valeur limite de vitesse de rotation supérieure (FO) de la fenêtre de vitesses de rotation (F) et avant qu'elle n'ait atteint la vitesse de rotation de marche à vide du moteur (LD).

4. Procédé selon au moins l'une quelconque des revendications précédentes, **caractérisé en ce que** l'actionneur d'enclenchement de rapport est activé lorsque la vitesse de rotation d'entrée de la transmission (GED) a atteint la valeur limite de vitesse de rotation supérieure (FO) de la fenêtre de vitesses de rotation (F) à partir de valeurs de vitesses de rotation d'entrée de la transmission plus élevées.

5. Procédé selon au moins l'une quelconque des revendications précédentes, **caractérisé en ce qu'**après l'ouverture de l'embrayage de démarrage et/ou de changement de rapport, un frein de transmission est activé.

6. Procédé selon au moins l'une quelconque des revendications précédentes, **caractérisé en ce que** le frein de transmission est déjà activé lorsque l'embrayage de démarrage et/ou de changement de rapport n'est d'abord que partiellement ouvert.

7. Procédé selon au moins l'une quelconque des revendications précédentes, **caractérisé en ce que** le frein de transmission reste activé au moins jusqu'à ce que la vitesse de rotation d'entrée de la transmission (GED), à partir de valeurs plus élevées, ait atteint la valeur limite de vitesse de rotation supérieure (FO) de la fenêtre de vitesses de rotation d'enclenchement (F).

8. Procédé selon au moins l'une quelconque des revendications précédentes, **caractérisé en ce que** le frein de transmission reste activé avec régulation au moins jusqu'à ce que la vitesse de rotation d'entrée de la transmission (GED) ait atteint la vitesse de rotation synchrone (SD).

9. Procédé selon au moins l'une quelconque des revendications précédentes, **caractérisé en ce que** le frein de transmission reste activé avec régulation au moins jusqu'à ce que la vitesse de rotation d'entrée de la transmission, à partir d'une valeur de gradient de vitesses de rotation actuel, ait atteint la vitesse de rotation synchrone.

10. Procédé selon au moins l'une quelconque des revendications précédentes, **caractérisé en ce que** le frein de transmission est activé de manière à freiner de telle sorte qu'un gradient de vitesses de rotation d'entrée de la transmission soit produit, avec lequel une opération de changement de rapport peut être réalisée avec un grand confort de changement de rapport.

11. Procédé selon au moins l'une quelconque des revendications précédentes, **caractérisé en ce qu'**un signal de fermeture pour que l'embrayage de démarrage et/ou de changement de rapport adopte une position de glissement est ensuite déclenché lorsque la vitesse de rotation d'entrée de la transmission (GED), à partir de valeurs de vitesses de rotation élevées, a atteint la valeur limite de vitesse de rotation supérieure (FO) de la fenêtre de vitesses de rotation (F) ou a atteint la vitesse de rotation synchrone (SD).

12. Procédé selon au moins l'une quelconque des revendications précédentes, **caractérisé en ce que** si l'embrayage de démarrage et/ou de changement de rapport n'est pas réalisé de manière à être activé par un actionneur séparé mais par la force centrifuge, la vitesse de rotation du moteur d'entraînement est ensuite variée pour fermer et ouvrir l'embrayage.
